(19) Europäisches Patentamt / European Patent Office / Office européen des brevets

(11) **EP 4 462 903 A1**

(12) **EUROPEAN PATENT APPLICATION**

(43) Date of publication:
**13.11.2024 Bulletin 2024/46**

(21) Application number: **24156463.2**

(22) Date of filing: **08.02.2024**

(51) International Patent Classification (IPC):
**H04W 72/02** (2009.01)     **H04W 72/25** (2023.01)
**H04W 72/563** (2023.01)

(52) Cooperative Patent Classification (CPC):
**H04W 72/25; H04W 72/02; H04W 72/563**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.05.2023 FI 20235531**

(71) Applicant: **Nokia Technologies Oy**
**02610 Espoo (FI)**

(72) Inventors:
• **MOREJON GARCIA, Carlos Santiago**
  **Aalborg (DK)**
• **KIILERICH PRATAS, Nuno Manuel**
  **Aalborg (DK)**
• **ROSA, Claudio**
  **Randers NV (DK)**
• **YANAKIEV, Boyan**
  **Aalborg (DK)**
• **BARBU, Oana-Elena**
  **Aalborg (DK)**

(74) Representative: **Nokia EPO representatives**
**Nokia Technologies Oy**
**Karakaari 7**
**02610 Espoo (FI)**

(54) **TETHERING INTER-USER EQUIPMENT COORDINATION GROUPING IN EXTENDED REALITY SERVICES**

(57)     A method may include transmitting a request groupcast message to a plurality of user equipment for their respective preferred or non-preferred resources. The method may also include receiving an information message including the preferred or the non-preferred resources from each user equipment of the plurality of user equipment in response to the request groupcast message. The method may further include identifying, based on the information message, at least one resource from the preferred or non-preferred resources for selection by the plurality of user equipment. In addition, the method may include notifying, via information tethering, to each user equipment of the plurality of user equipment, the identified at least one resource that corresponds to the apparatus and to each user equipment of the plurality of user equipment.

Transmit a request groupcast message to a plurality of user equipment for their respective preferred or non-preferred resources — 1500

Receive an information message including the preferred or the non-preferred resources from each user equipment of the plurality of user equipment in response to the request groupcast message — 1505

Identify, based on the information message, at least one resource from the preferred or non-preferred resources for selection by the plurality of user equipment — 1510

Notify, via information tethering, to each user equipment of the plurality of user equipment, the identified at least one resource that corresponds to the apparatus and to each user equipment of the plurality of user equipment — 1515

FIG. 15

**Description**

FIELD:

Some example embodiments may generally relate to mobile or wireless telecommunication systems, such as Long-Term Evolution (LTE) or fifth generation (5G) new radio (NR) access technology, or 5G beyond, or other communications systems. For example, certain example embodiments may relate to apparatuses, systems, and/or methods for tethering inter-user equipment coordination (IUC) grouping in extended reality (XR) services.

BACKGROUND:

Examples of mobile or wireless telecommunication systems may include the Universal Mobile Telecommunications System (UMTS) Terrestrial Radio Access Network (UTRAN), LTE Evolved UTRAN (E-UTRAN), LTE-Advanced (LTE-A), MulteFire, LTE-A Pro, and/or fifth generation (5G) radio access technology or NR access technology. 5G wireless systems refer to the next generation (NG) of radio systems and network architecture. 5G network technology is mostly based on new radio (NR) technology, but the 5G (or NG) network can also build on E-UTRAN radio. It is estimated that NR may provide bitrates on the order of 10-20 Gbit/s or higher, and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the IoT.

SUMMARY:

Other example embodiments may be directed to an apparatus. The apparatus may include at least one processor and at least one memory including computer program code. The at least one memory and computer program code may be configured to, with the at least one processor, cause the apparatus at least to transmit a request groupcast message to a plurality of user equipment for their respective preferred or non-preferred resources. The apparatus may also be caused to receive an information message including the preferred or the non-preferred resources from each user equipment of the plurality of user equipment in response to the request groupcast message. The apparatus may further be caused to identify, based on the information message, at least one resource from the preferred or non-preferred resources for selection by the plurality of user equipment. In addition, the apparatus may be caused to notify, via information tethering, to each user equipment of the plurality of user equipment, the identified at least one resource that corresponds to the apparatus and to each user equipment of the plurality of user equipment.

Other example embodiments may be directed to an apparatus. The apparatus may include at least one processor and at least one memory including computer program code. The at least one memory and computer program code may be configured to, with the at least one processor, cause the apparatus at least to receive, from a user equipment, a request groupcast message for preferred or non-preferred resources. The apparatus may also be caused to transmit, to the user equipment in response to the request groupcast message, an information message including the preferred or non-preferred resources. The apparatus may further be caused to receive, from the user equipment, an information tethering message including at least one resource from the preferred or non-preferred resources corresponding to the apparatus and the user equipment. In addition, the apparatus may be caused to select, based on the information tethering message, a time-frequency resource for data transmission.

Certain example embodiments may be directed to a method. The method may include transmitting a request groupcast message to a plurality of user equipment for their respective preferred or non-preferred resources. The method may also include receiving an information message including the preferred or the non-preferred resources from each user equipment of the plurality of user equipment in response to the request groupcast message. The method may further include identifying, based on the information message, at least one resource from the preferred or non-preferred resources for selection by the plurality of user equipment. In addition, the method may include notifying, via information tethering, to each user equipment of the plurality of user equipment, the identified at least one resource that corresponds to the apparatus and to each user equipment of the plurality of user equipment.

Certain example embodiments may be directed to a method. The method may include receiving, from a user equipment, a request groupcast message for preferred or non-preferred resources. The method may also include transmitting, to the user equipment in response to the request groupcast message, an information message including the preferred or non-preferred resources. The method may further include receiving, from the user equipment, an information tethering message including at least one resource from the preferred or non-preferred resources corresponding to the apparatus and the user equipment. In addition, the method may include selecting, based on the information tethering message, a time-frequency resource for data transmission.

Certain example embodiments may be directed to an apparatus. The apparatus may include means for transmitting a request groupcast message to a plurality of user equipment for their respective preferred or non-preferred resources. The apparatus may also include means for receiving an information message including the preferred or the non-preferred resources from each user equipment of the plurality of user equipment in response to the request groupcast message. The apparatus may further include means for identifying, based on the information message, at least one resource from the preferred or non-preferred resources for selection by the plurality of user equipment. In addition, the apparatus may include means for notifying, via information tethering, to each user equipment of the plurality of user equipment, the identified at least one resource that corresponds to the apparatus and to each user equipment of the plurality of user equipment.

Certain example embodiments may be directed to an apparatus. The apparatus may include means for receiving, from a user equipment, a request groupcast message for preferred or non-preferred resources. The apparatus may also include means for transmitting, to the user equipment in response to the request groupcast message, an information message including the preferred or non-preferred resources. The apparatus may further include means for receiving, from the user equipment, an information tethering message including at least one resource from the preferred or non-preferred resources corresponding to the apparatus and the user equipment. In addition, the apparatus may include means for selecting, based on the information tethering message, a time-frequency resource for data transmission.

In accordance with other example embodiments, a non-transitory computer readable medium may be encoded with instructions that may, when executed in hardware, perform a method. The method may include transmitting a request groupcast message to a plurality of user equipment for their respective preferred or non-preferred resources. The method may also include receiving an information message including the preferred or the non-preferred resources from each user equipment of the plurality of user equipment in response to the request groupcast message. The method may further include identifying, based on the information message, at least one resource from the preferred or non-preferred resources for selection by the plurality of user equipment. In addition, the method may include notifying, via information tethering, to each user equipment of the plurality of user equipment, the identified at least one resource that corresponds to the apparatus and to each user equipment of the plurality of user equipment.

Other example embodiments may be directed to a computer program product that performs a method. The method may include transmitting a request groupcast message to a plurality of user equipment for their respective preferred or non-preferred resources. The method may also include receiving an information message including the preferred or the non-preferred resources from each user equipment of the plurality of user equipment in response to the request groupcast message. The method may further include identifying, based on the information message, at least one resource from the preferred or non-preferred resources for selection by the plurality of user equipment. In addition, the method may include notifying, via information tethering, to each user equipment of the plurality of user equipment, the identified at least one resource that corresponds to the apparatus and to each user equipment of the plurality of user equipment.

Other example embodiments may be directed to an apparatus that may include circuitry configured to transmit a request groupcast message to a plurality of user equipment for their respective preferred or non-preferred resources. The apparatus may also include circuitry configured to receive an information message including the preferred or the non-preferred resources from each user equipment of the plurality of user equipment in response to the request groupcast message. The apparatus may further include circuitry configured to identify, based on the information message, at least one resource from the preferred or non-preferred resources for selection by the plurality of user equipment. In addition, the apparatus may include circuitry configured to notify, via information tethering, to each user equipment of the plurality of user equipment, the identified at least one resource that corresponds to the apparatus and to each user equipment of the plurality of user equipment.

In accordance with other example embodiments, a non-transitory computer readable medium may be encoded with instructions that may, when executed in hardware, perform a method. The method may include receiving, from a user equipment, a request groupcast message for preferred or non-preferred resources. The method may also include transmitting, to the user equipment in response to the request groupcast message, an information message including the preferred or non-preferred resources. The method may further include receiving, from the user equipment, an information tethering message including at least one resource from the preferred or non-preferred resources corresponding to the apparatus and the user equipment. In addition, the method may include selecting, based on the information tethering message, a time-frequency resource for data transmission.

Other example embodiments may be directed to a computer program product that performs a method. The method may include receiving, from a user equipment, a request groupcast message for preferred or non-preferred resources. The method may also include transmitting, to the user equipment in response to the request groupcast message, an information message including the preferred or non-preferred resources. The method may further include receiving, from the user equipment, an information tethering message including at least one resource from the preferred or non-preferred resources corresponding to the apparatus and the user equipment. In addition, the method may include selecting, based on the information tethering message, a time-frequency resource for data transmission.

Other example embodiments may be directed to an apparatus that may include circuitry configured to receive, from a user equipment, a request groupcast message for preferred or non-preferred resources. The apparatus may also include circuitry configured to transmit, to the user equipment in response to the request groupcast message, an information message including the preferred or non-preferred resources. The apparatus may further include circuitry configured to receive, from the user equipment, an information tethering message including at least one resource from the preferred or non-preferred resources corresponding to the apparatus and the user equipment. In addition, the apparatus may include circuitry configured to select, based on the information tethering message, a time-frequency resource for data transmission.

BRIEF DESCRIPTION OF THE DRAWINGS:

For proper understanding of example embodiments, reference should be made to the accompanying drawings, wherein:

FIG. 1 illustrates an example scenario of where an extended reality (XR) experience is delivered by multiple user equipment.
FIG. 2(a) illustrates an example new radio sidelink (NR SL) resource allocation mode 1.
FIG. 2(b) illustrates an example NR SL resource allocation mode 2.
FIG. 3 illustrates an example SL slot format.
FIG. 4 illustrates an example of physical sidelink shared channel demodulated reference signal (PSSCH DMRS) configurations based on a number of used symbols and duration of the PSCCH.
FIG. 5(a) illustrates an example signal diagram of NR SL mode 1 inter-user equipment coordination (IUC) scheme 1.
FIG. 5(b) illustrates an example signal diagram of NR SL mode 2 IUC scheme 2.
FIG. 6 illustrates an example signal diagram of a signaling exchange failure to achieve IUC for resource selection.
FIG. 7 illustrates an example signal diagram to render and exchange XR data between XR devices.
FIG. 8 illustrates an example signal diagram of enhanced signaling exchange, according to certain example embodiments.
FIG. 9 illustrates an example medium access control service data unit (MAC SDU) concatenating multiple groupcast IUC requests, according to certain example embodiments.
FIG. 10 illustrates an example MAC protocol data unit (PDU) concatenating multiple groupcast IUC requests, according to certain example embodiments.
FIG. 11 illustrates an example MAC SDU concatenating multiple groupcast IUC information, according to certain example embodiments.
FIG. 12 illustrates an example MAC PDU concatenating multiple groupcast IUC information, according to certain example embodiments.
FIG. 13 illustrates an example SL IUC with buffer status report (BSR) information, according to certain example embodiments.
FIG. 14 illustrates an example of the number of SL slots needed for IUC signaling exchange, according to certain example embodiments.
FIG. 15 illustrates an example flow diagram of a method, according to certain example embodiments.
FIG. 16 illustrates an example flow diagram of another method, according to certain example embodiments.
FIG. 17 illustrates a set of apparatuses, according to certain example embodiments.

DETAILED DESCRIPTION:

It will be readily understood that the components of certain example embodiments, as generally described and illustrated in the figures herein, may be arranged and designed in a wide variety of different configurations. The following is a detailed description of some example embodiments of systems, methods, apparatuses, and computer program products for tethering inter-user equipment coordination (IUC) grouping in extended reality (XR) services.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "base station", "cell", "node", "gNB", "network" or other similar language throughout this specification may be used interchangeably. In addition, the terms "user equipment", "UE", "device", "mobile device", "mobile station", "MS", or other similar language throughout this specification may be used interchangeably. Additionally, the terms broadcast, transmit, or other similar language, throughout this specification may be used interchangeably.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

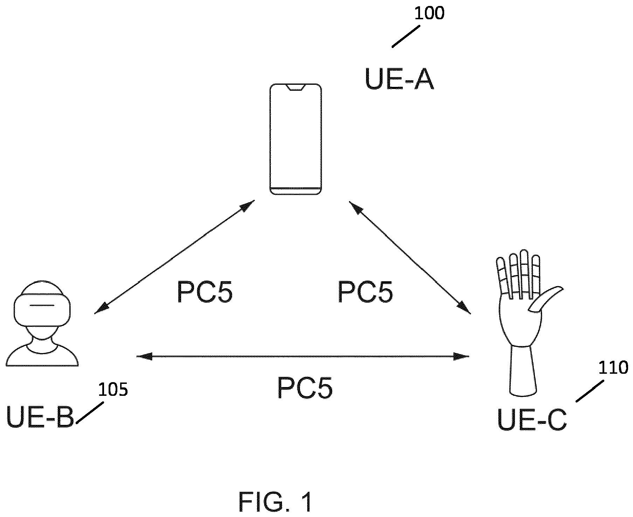

The technical specifications of the 3rd Generation Partnership Project (3GPP), provide support for extended reality (XR) technology to be deployed across multiple user equipment (UE) devices. A tethering use case involves a UE consisting of a main 5G modem (e.g., a phone, a puck, or anything providing 5G capability), and an augmented reality (AR) glass device as a primary media consumption device. In scenarios where an XR application runs on a smartphone, it may render the content to other devices that are part of the same XR experience (e.g., virtual reality (VR) glasses, haptics, a watch, etc.). Using a network infrastructure, undesired latency may be introduced to data transmissions, making it challenging to fulfill any latency requirements. Thus, it may be assumed that UEs use direct communication through device-to-device data transmission/reception. For direct communication, the UEs may perform data exchange using a PC5 interface established for sidelink (SL) communications using 3GPP NR SL mode 2. FIG. 1 illustrates an example scenario of where an XR experience is delivered by three UEs 100, 105, and 110 (A, B, and C). As illustrated in FIG. 1, data exchange may be performed through the PC5 interface.

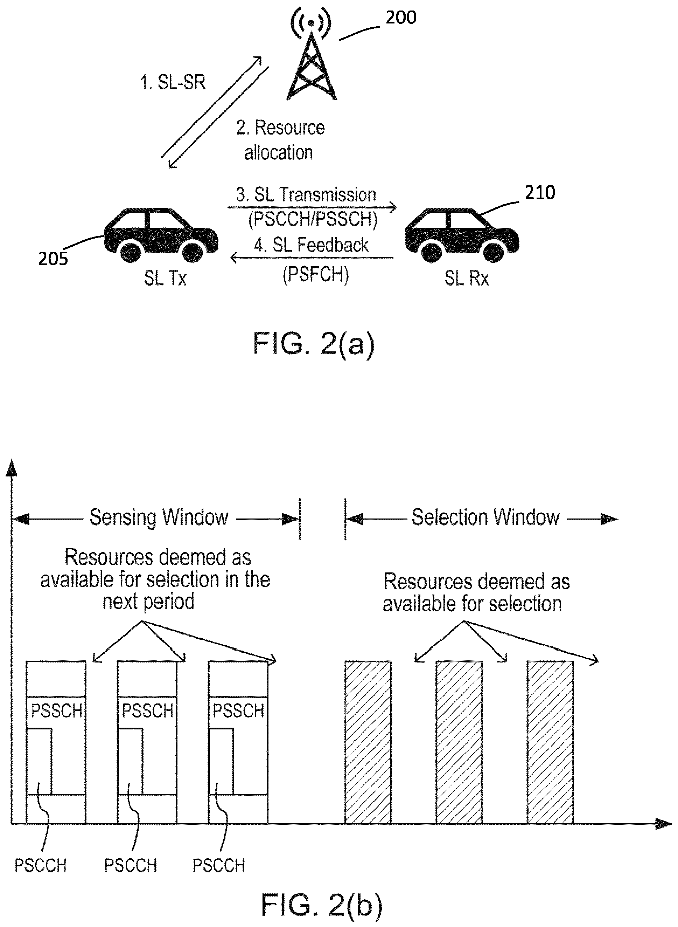

NR SL may facilitate a UE to communicate with other nearby UEs via direct/SL communication. Two resource allocation modes may be implemented, and a SL transmitter (Tx) UE may be configured with one of them to perform its NR SL transmissions. For instance, the two resource allocation modes may include NR SL mode 1 and NR SL mode 2. FIG. 2(a) illustrates an example NR SL resource allocation mode 1, and FIG. 2(b) illustrates an example NR SL resource allocation mode 2.

FIG. 2(a) illustrates an example new radio sidelink (NR SL) resource allocation mode 1, and FIG. 2(b) illustrates an example NR SL resource allocation mode 2. As illustrated in FIGs. 2(a) and 2(b), in mode 1, a SL transmission resource is assigned (scheduled) by the network (NW) 200 to the SL Tx UE 205, while a SL Tx UE in mode 2 autonomously selects its SL transmission resource. The SL Tx 205 is in communication with both the network 200 and a SL receiver (Rx) 210. In mode 2, the SL UEs may autonomously perform the resource selection with the aid of a sensing procedure. For instance, a SL Tx UE in NR SL mode 2 may first perform a sensing procedure over the configured SL transmission resource pool(s) to obtain the knowledge of the reserved resource(s) by other nearby SL Tx UE(s). Based on the knowledge obtained from sensing, the SL Tx UE may select resource(s) from the available SL resources. Furthermore, for a SL UE to perform sensing and obtain the necessary information to receive a SL transmission, the SL UE may decode the SL control information (SCI).

SCI may follow a 2-stage SCI structure, which may support the size difference between the SCIs for various NR-vehicle-to-everything (V2X) SL service types (e.g., broadcast, groupcast, and unicast). The first stage SCI such as, for example, SCI format 1-A, may be carried by the physical sidelink control channel (PSCCH). The first stage SCI may include information to enable sensing operations, and information needed to determine resource allocation of the physical sidelink shared channel (PSSCH) and to decode the second-stage SCI.

The second-stage SCI, SCI format 2-A and 2-B, may be carried by PSSCH (multiplexed with SL-SCH). The second-stage SCI may include source and destination identities, information to identify and decode the associated SL-SCH TB, control of hybrid automatic repeat request (HARQ) feedback in unicast/groupcast, and/or a trigger for channel state information (CSI) feedback in unicast.

Configuration of the resources in the SL resource pool may define the minimum information needed for a Rx UE to be able to decode a transmission. For example, the information may include the number of sub-channels, the number of physical resource blocks (PRBs) per sub-channel, the number of symbols in the PSCCH, and which slots have a physical SL feedback channel (PSFCH).

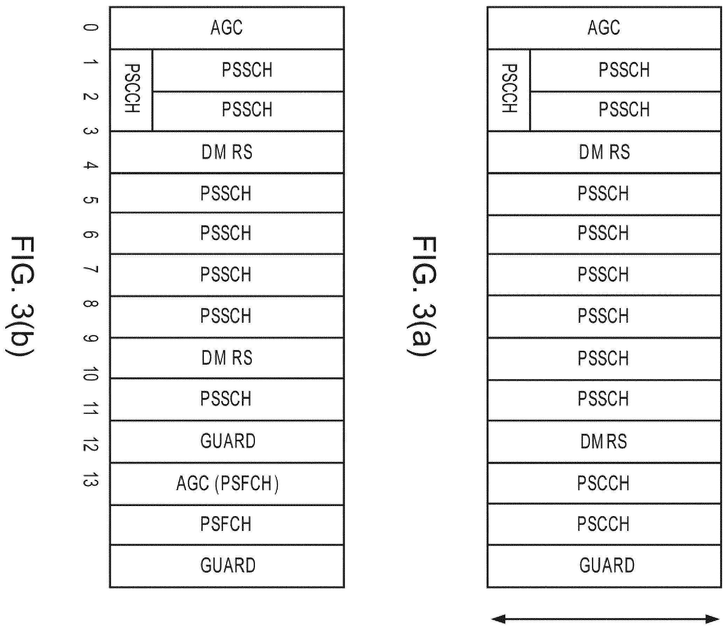

The details of the actual SL transmission (i.e., the payload) may be provided in the PSCCH (first-stage SCI) for each individual transmission, which may include: the time and frequency resources; the demodulated reference signal (DMRS) configuration of the PSSCH, the modulation and coding scheme (MCS), PSFCH, and others. For instance, FIG. 3 illustrates an example SL slot format. In particular, part (a) of FIG. 3 illustrates a slot with PSCCH/PSSCH, and part (b) of FIG. 3 illustrates a slot with PSCCH/PSSCH and PSFCH.

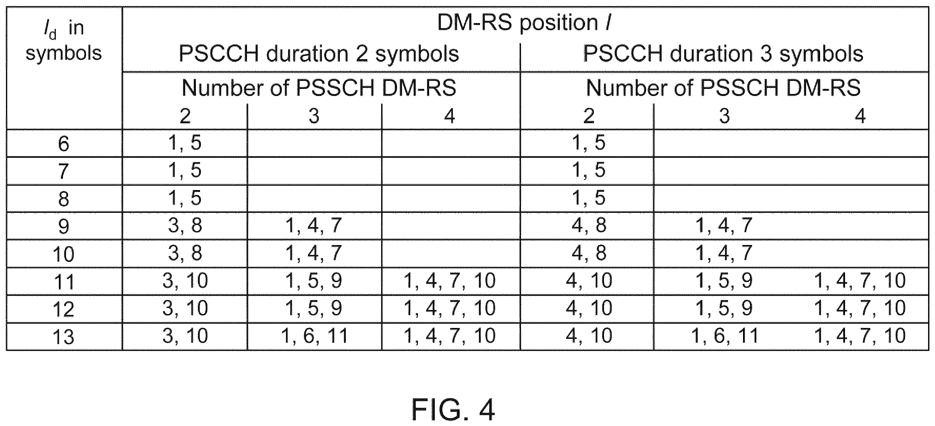

The configuration of the PSCCH (e.g., DMRS, MCS, number of symbols used) may be a part of the resource pool configuration. Additionally, the indication of which slots have PSFCH symbols may also be part of the resource pool configuration. However, the configuration of the PSSCH (e.g., the number of symbols used, the DMRS pattern, and the MCS) may be provided by the first-stage SCI which is the payload sent within the PSCCH and follows the configuration illustrated in FIG. 4. In particular, FIG. 4 illustrates an example of PSSCH DMRS configurations based on the number of used symbols and duration of the PSCCH.

The SL UE may support IUC in mode 2, whereby UE-A sends information about resources to UE-B, which UE-B then uses for resource (re)selection. IUC may support various schemes including, for example, IUC scheme 1 and IUC scheme 2. In IUC scheme 1, the coordination information sent from a UE-A to a UE-B may be preferred or non-preferred resources for UE-B's transmission. In IUC scheme 2, the coordination information sent from UE-A to UE-B may be in the presence of expected/potential resource conflict on the resources indicated by UE-B's SCI.

In scheme 1, the IUC may be triggered by an explicit request from UE-B, or by a condition at UE-A. UE-A may determine the set of resources reserved by other UEs or slots where UE-A, when it is the intended receiver of UE-B, does not expect to perform SL reception from UE-B due to a half-duplex operation. UE-A may use the resources as the set of non-preferred resources, or exclude the resources to determine a set of preferred resources, and send the preferred/non-preferred resources to UE-B. UE-B's resources for resource (re)selection may be based on both UE-B's sensing results (if available), and the coordination information received from UE-A, or it may be based on coordination information received from UE-A. For scheme 1, medium access control (MAC) control element (CE) and second-stage SCI or MAC CE may be used to send IUC. The explicit request and reporting for IUC in unicast may be supported.

In scheme 2, UE-A may determine the expected/potential resource conflict within the resources indicated by UE-B's SCI as either resources reserved by other UEs and identified by UE-A as fully/partially overlapping with the resources indicated by UE-B's SCI, or as slots where UE-A is the intended receiver of UE-B and does not expect to perform SL reception on those slots due to half-duplex operation. UE-B may use the conflicting resources to determine the resources to be re(selected), and exclude the conflicting resources from the (re)selected resources. For scheme 2, PSFCH may be used to send IUC.

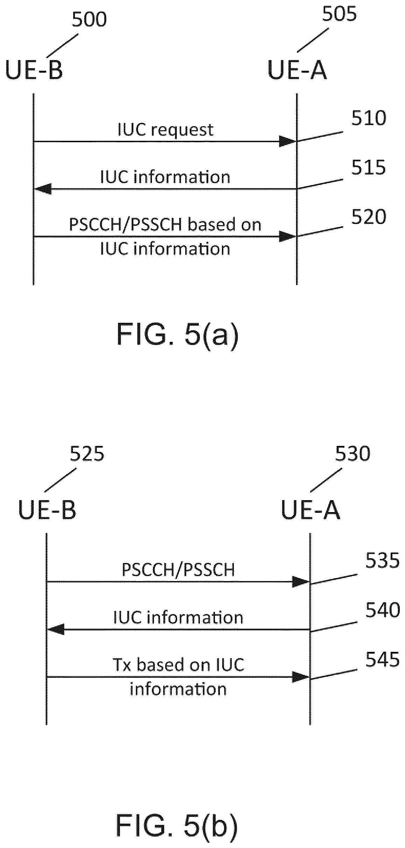

FIG. 5(a) illustrates an example signal diagram of NR SL mode 1 IUC scheme 1, and FIG. 5(b) illustrates an example signal diagram of NR SL mode 2 IUC scheme 2 to perform coordinated resource allocation. As illustrated in FIGs. 5(a) and 5(b), the signal diagram may involve UE-B 500, 525 and UE-A 505, 530. At 510 of FIG. 5(a), UE-B 500 transmits an IUC request to UE-A 505. At 515, UE-A 505, in response to the IUC request, transmits IUC information to UE-B 500. At 520, UE-B 500 transmits PSCCH/PSSCH to UE-A 505 based on the received IUC information.

At 535 of FIG. 5(b), UE-B 525 transmits PSCCH/PSSCH to UE-A 530. At 540, UE-A 530 transmits IUC information to UE-B 525 in response to the PSCCH/PSSCH. At 545, UE-B 525 transmits Tx based on IUC information to UE-A 530.

If the XR rendering and the associated data exchange is implemented using SL (mode 2 with IUC scheme 1 for high reliability), then this may imply the exchange of new IUC signaling whenever a resource (re)selection occurs, or when non-semi-persistent scheduling (SPS) traffic (i.e., aperiodic traffic) needs to be exchanged. To achieve the best possible resource allocation, IUC signaling may be performed between each pair of communicating UEs with at least the following signaling messages (see FIG. 5(a)): IUC request and IUC information. The IUC request may include the IUC request MAC CE consisting of 6 bytes (48 bits), the IUC information may include the IUC information MAC CE of variable size, and 2-stage SCI. The 2-stageSCI may include the first stage format 1-A, second stage format 2-C, and MAC protocol data unit (PDU) IUC including the MAC CE header and the MAC CE.

Each pair of UEs may need a minimum of two SL slots for signaling prior to the actual data transmission: one for IUC request and one for IUC information. However, this may create certain drawbacks where whenever the IUC information is not received, additional signaling is needed to recover. Additionally, the excessive number of signaling messages introduces additional latency that may make data useless if received after the required latency target (e.g., packet delay budget (PDB) or PDU set delay budget (PSDB)).

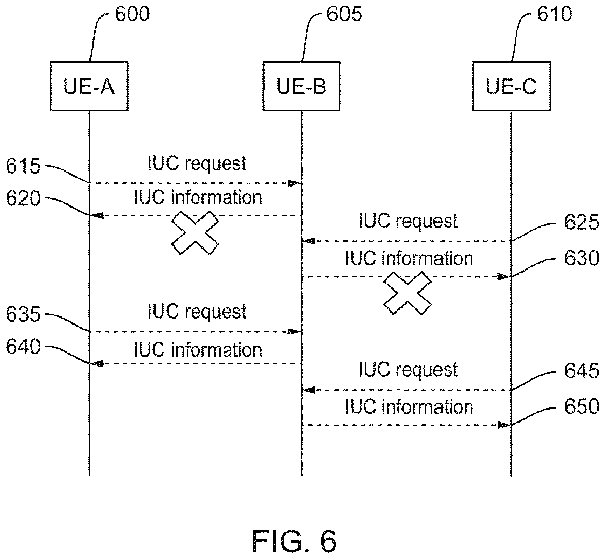

With reference to FIG. 1, when UE-B fails to provide its IUC information to UEs A and C, UEs A and C may need to send an IUC request again and wait for it. In this example, four additional slots for signaling transmissions would be required since the current IUC specification is supported only for unicast transmissions. This example is illustrated in FIG. 6 as an example signal diagram of a signaling exchange failure to achieve IUC for resource selection. In particular, at 615, UE-A 600 transmits an IUC request to UE-B 605. However, at 620, the IUC information transmitted from UE-B 605 to UE-A 600 is not received. Similarly, at 625, UE-C 610 transmits an IUC request to UE-B 605. However, at 630, the IUC information transmitted from UE-B to UE-C is not received by UE-C 610. Thus, at 635, UE-A 600 transmits another IUC request to UE-B 605, and at 640, UE-B transmits IUC information to UE-A 600. Additionally, at 645, UE-C 610 transmits another IUC request to UE-B 605, and at 650, UE-B 605 transmits IUC information to UE-C 610. Thus, as illustrated in FIG. 6, whenever IUC information is not received, additional signaling is needed to recover.

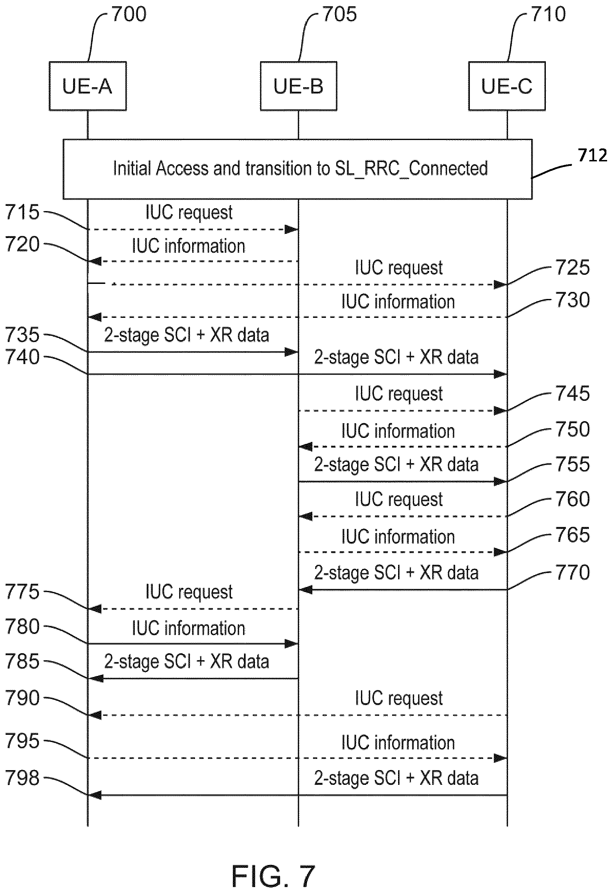

For the same case as illustrated in FIG. 6, if the UEs need data simultaneously, they would need to wait for the signaling exchange before receiving it. The more UEs belonging to the XR application, the longer the delay becomes, which may lead to overpassing latency requirements. Quantifying this problem may involve determining the number of SL slots needed to transmit the signaling $\psi$ given by: $\psi = n \times (2 \times n - 2)$, where $n$ corresponds to the number of devices belonging to the XR experience. In this example of three UEs (A, B, and C), twelve slots are required to transmit all IUC messages, as shown with the dashed arrows in FIG. 7.

FIG. 7 illustrates an example signal diagram to render and exchange XR data between XR devices. At 712, an initial access and transition to SL-RRC_Connected may be initiated. For example, the UEs (UE-A, UE-B, UE-C) may establish a PC5-RRC connection to transfer data to each other over the PC5 interface. At 715, UE-A 700 transmits an IUC request to UE-B 705. In response, at 720, UE-B 705 transmits IUC information to UE-A 700. At 725, UE-A 700 transmits an IUC request to UE-C 710. In response, at 730, UE-C 710 transmits IUC information to UE-A 700. At 735, UE-A 700 transmits 2-stage SCI and XR data to UE-B 705, and at 740, also transmits 2-stage SCI and XR data to UE-C 710.

At 745, UE-B 705 transmits an IUC request to UE-C 710. In response, at 750, UE-C 710 transmits IUC information to UE-B 705. At 755, UE-B 705 transmits 2-stage SCI and XR data to UE-C 710. At 760, UE-C 710 transmits an IUC request to UE-B 705. In response, at 765, UE-B 705 transmits IUC information to UE-C 710. At 770, UE-C 710 transits 2-stage SCI and XR data to UE-B 705.

At 775, UE-B 705 transmits an IUC request to UE-A 700. In response, at 780, UE-A 700 transmits IUC information to UE-B 705. At 785, UE-B 705 transmits 2-stage SCI and XR data to UE-A 700. At 790, UE-C 710 transmits an IUC request to UE-A 700. In response, UE-A 700 transmits IUC information to UE-C 710. At 798, UE-C 710 transmits 2-stage SCI and XR data to UE-A 700.

In view of the drawbacks described above, certain example embodiments may provide a signaling that allows for extension, by a lower SL resource usage, the SL IUC framework to cover a tethering group use case. A tethering group may include UE-A (e.g., a smartphone, a wearable device, a network node or other wired/wireless communication device capable of providing a suitable connection), and at least one additional UE/device (UE-B, UE-C, etc.), which is/are the primary consumer(s) of the XR data/experience. In other example embodiments, UE-B, UE-C, and additional UEs/devices can be any device providing the XR experience. In certain example embodiments, UE-A (or anyone of UE-B or UE-C) may be the coordinating device in charge of coordinating the resources among all devices participating in the tethering group.

According to certain example embodiments, the coordinating device may collect the preferred (or non-preferred) resources for the reception of all the UEs/devices taking part in the tethering group. This may be accomplished by the coordinating device (i.e., UE-A) signaling an IUC request groupcast message, followed by other UE devices (e.g., UE-B and UE-C) responding with individual IUC information messages. Although certain example embodiments relate to UE-A, UE-B, and UE-C, in other example embodiments, additional UEs may be present as well.

In certain example embodiments, once the IUC request groupcast message has been transmitted, UE-A may identify the best resources that each UE (e.g., UE-A, UE-B, and UE-C) should select to avoid half-duplex and interference. In some example embodiments, the best resources may correspond to most suitable time-frequency resources a UE can select from its own point of view. In other example embodiments, the best resources may be a selection out of the preferred/non-preferred resource received via IUC information from the group members. After the best resources are identified, UE-A may inform UE-B and UE-C about this identification through IUCInformationTethering (i.e., the new message with the combined/concatenated IUC information), which is a new MAC CE included in the MAC PDU IUC. In some example embodiments, the IUCInformationTethering may include the combined preferred/non-preferred resources from all members of the tethering group (i.e., UE-A, UE-B, and UE-C). The new MAC CE may include the sets of best resources for each UE taking part of the tethering group, including the UE coordinating the resource allocation (UE-A).

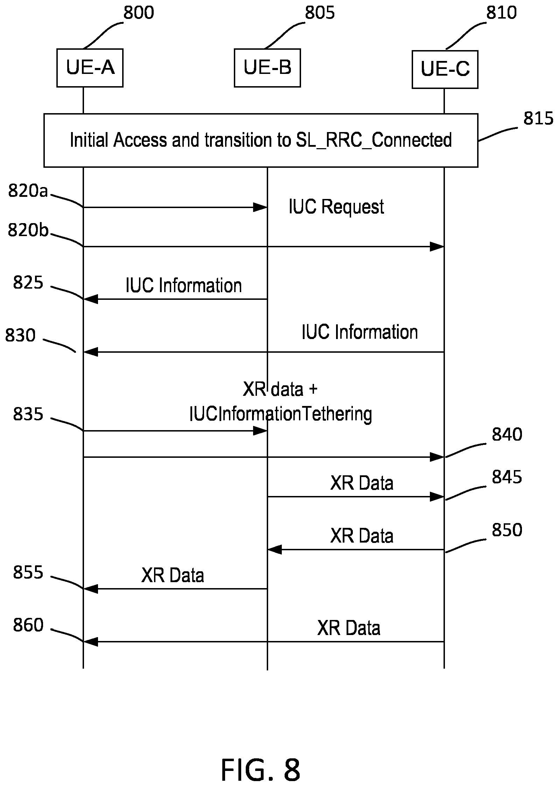

FIG. 8 illustrates an example signal diagram of enhanced signaling exchange, according to certain example embodiments. In the example signal diagram of FIG. 8, UE-A 800 may act as the coordinating device. At 815, UE-A 800, UE-B 805, and UE-C 810 may be in a tethering group, and may be connected with each other via an initial access and transition to SL-RRC_Connected. For example, the UEs may establish a PC5-RRC connection to transfer data over the PC5 interface. At 820a and 820b, UE-A 800 transmits a single IUC request message to UE-B 805 and UE-C 810. At 825 and 830, UE-B 805 and UE-C 810 respectively transmits IUC information to UE-A 800 in response to the IUC request message. At 835 and 840, UE-A 800 processes the received IUC information from UE-B 805 and UE-C 810, which may include combining or concatenating the IUC information into a new message. UE-A 800 then respectively transmits the new message in the form of XR data with an IUCInformationTethering message to UE-B 805 and UE-C 810. According to certain example embodiments, the new message may include an identification of the best resources for each of UE-B 805 and UE-C 810, as well as for UE-A 800 coordinating the resource allocation. At 845, UE-B 805 transmits XR data to UE-C 810, and at 850, UE-C 810 transmits XR data to UE-B 805. At 855 and 860, UE-B 805 and UE-C 810 respectively transmit XR data to UE-A 800. In certain example embodiments, the XR data may correspond to information bits carrying the necessary content to run the XR experience on each device. For example, in VR glasses, it is video. In headphones, it is audio, and in gloves, it is haptics.

As illustrated in FIG. 8, at 820, UE-A 800 transmits an IUC request groupcast message to UE-B 805 and UE-C 810, where UE-A 800, UE-B 805, and UE-C 810 are all members of a tethering group. According to certain example embodiments, the IUC request message may be transmitted in a groupcast manner. For example, the IUC request MAC CE may be transmitted in associated with a second-stage SCI where it is indicated as a destination ID, or the ID of the tethering group. According to other example embodiments, a new logical channel identifier (LCID) may be introduced to differentiate between unicast and groupcast IUC requests. When the traffic from all tethering group members is the same, the MAC CE fields may be reused from the unicast IUC request.

According to other example embodiments, when the traffic characteristics (e.g., amount, associated packet delay budget, priority, etc.) from the tethering group members differ from each other, multiple inter-UE requests MAC CEs can be concatenated in the same MAC SDU, with a preamble MAC CE indicating the IDs of the group members.

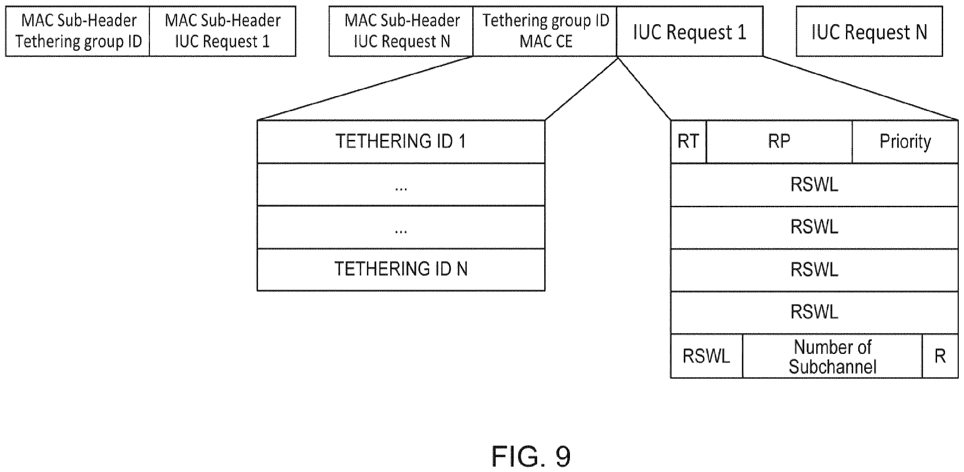

Additionally, the correspondence between the ID and Mac PDU may be based on the order of appearance of the MAC CEs in the MAC SDU, as illustrated in FIG. 9. Specifically, FIG. 9 illustrates an example MAC SDU concatenating multiple groupcast IUC requests, according to certain example embodiments. As illustrated in FIG. 9, the IUC request MAC CE may be identified by a MAC sub-header with LCID. The RT field may indicate the resource set type (i.e., preferred resource set or non-preferred resource set). The RP field may indicate the resource reservation period. Additionally, the priority field may indicate the priority as the codepoint value of the SCI format 2-C. Furthermore, the RSWL field may indicate resource selection window location, as the codepoint value of the SCI format 2-C *resourceSelectionWindowLocation* field. Furthermore, the number of sub-channel field may indicate the number of sub-channels, as the codepoint value of the SCI format 2C *numberOfSubchannel* field. The length of the field may be 6 bits, and this field may include *numberOfSubchannel* field using the least significant bits. The number sub-channel field may indicate the number of subchannels, as the codepoint value of the SCI format 2-C *numberOfSubchannel* field. The length of the number of sub-channel field may be 5 bits.

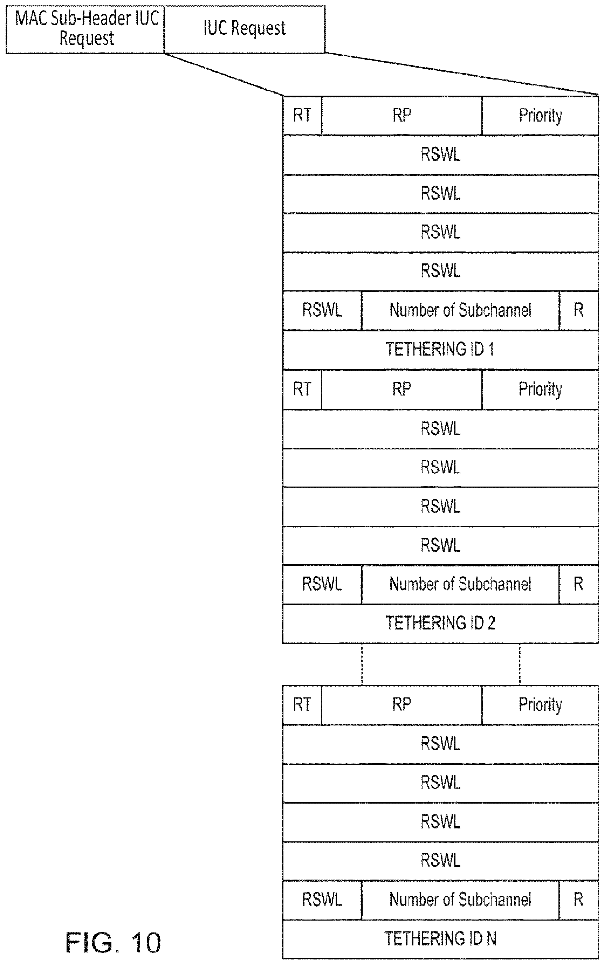

FIG. 10 illustrates an example MAC PDU concatenating multiple groupcast IUC requests, according to certain example embodiments. As illustrated in FIG. 10, a single inter-UE request MAC CE may include the IUC request for each tethering group member.

According to certain example embodiments, the IUC information may correspond to the IUC information message as defined in Rel. 17 IUC scheme 1. As further illustrated in FIG. 8, the IUCInformationTethering may correspond to the processed concatenation of the IUC requests received from the different tethering group members (i.e., UE-B 805 and UE-C 810). In certain example embodiments, the IUC information may be transmitted in a groupcast manner. For example, the IUC information MAC CE may be transmitted in association with a second-stage SCI where it is indicated as a destination ID, the ID of the tethering group. According to certain example embodiments, a new LCID may be introduced to differentiate between unicast and groupcast inter-UE coordination requests. When the traffic from all tethering group members is the same, the MAC CE fields may be reused from the unicast inter-UE information.

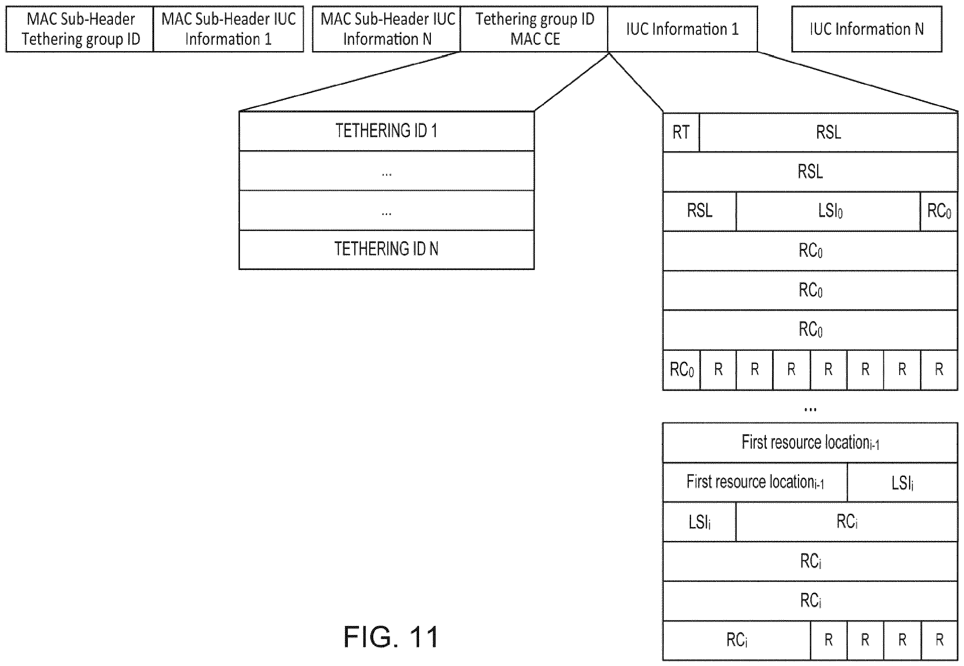

In other example embodiments, when the traffic characteristics (i.e., amount, associated packet delay budget, priority, etc.) from the tethering group members differ, then multiple inter-UE information MAC CEs may be concatenated in the same MAC SDU. In some example embodiments, a preamble MAC CE may indicate the IDs of the group members, and the correspondence between the tethering IDs and MAC PDU may be based on the order of appearance of the MAC CEs in the MAC SDU, as illustrated in FIG. 11. In particular, FIG. 11 illustrates an example MAC SDU concatenating multiple groupcast IUC information, according to certain example embodiments.

As illustrated in FIG. 11, the RT field may indicate the resource set type (i.e., preferred resource set or non-preferred resource set), as the codepoint value of the SCI format 2-C *resourceSetType* field. The RSL field may indicate the location of the reference slot, as the codepoint value of the SCI format 2-C *referenceSlotLocation* field. The length of the field may be 17 bits. If the length of *referenceSlotLocation* field in SCI format 2-C is shorter than 17 bits, this field may include *referenceSlotLocation* field using the LSB bits. The $LSI_i$ field may indicate the lowest sub-channel indices for the first resource location of each time resource indicator value (TRIV) within the first resource combination, $LSI_1$ may indicate the lowest sub-channel indices for the first resource location of TRIV within the second resource combination, and so on. The length of the field may be 5 bits. If the length of *lowestINdieces* in SCI format 2-C is shorter than 5 bits, this field may include *lowestIndices* field using the LSB bits.

The $RC_i$ field may indicate a resource combination, as the codepoint value of the SCI format 2-C *resourceCombination* field. $RC_0$ indicates the first resource combination, and RCi indicates the second resource combination and so on. The length of the field may be 26 bits, and if the length of *resourceCombination* field in SCI format 2-C is shorter than 26 bits, this field includes *resourceCombination* field using the LSB bits.

The first resource location$_{i-1}$ field may indicate first resource location, as the codepoint value of the SCI format 2-C *firstREsoruceLocation* field. The first resource location$_0$ may indicate the first resource location for the second resource combination. The first Resource Location$_i$ may indicate the first resource location for the third resource combination and so on. The length of the field may be 13 bits. If the length of *firstResoruceLocation* field in SCI format 2-C is shorter than 13 bits, this field may include the *firstREsourceLocation* field using the LSB bits. As further illustrated in FIG. 11, the R field corresponds to reserved bits, and may be set to 0.

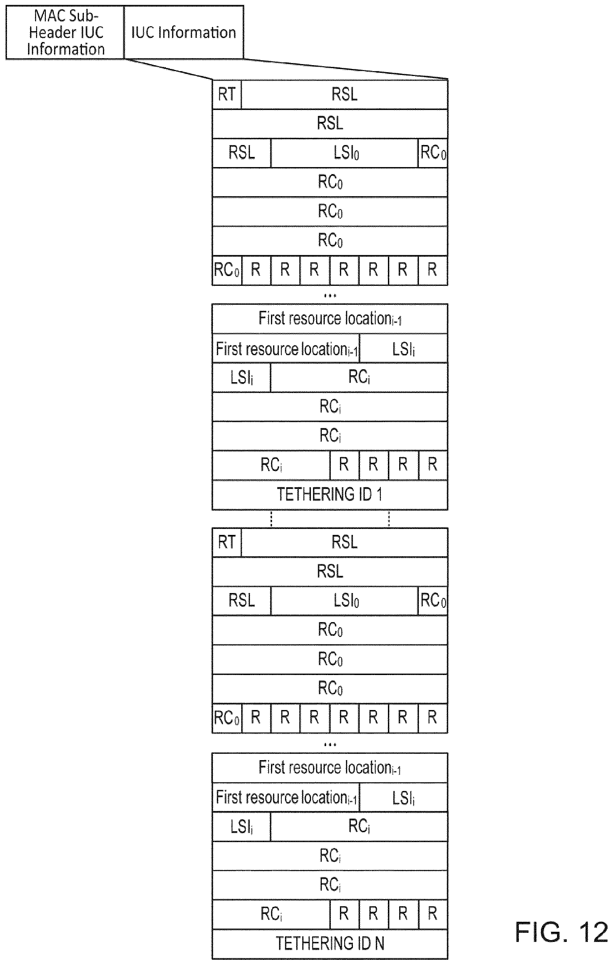

FIG. 12 illustrates an example MAC PDU concatenating multiple groupcast IUC information, according to certain example embodiments. As illustrated in the example of FIG. 12, a single inter-UE information MAC CE may include the IUC information for each tethering group member.

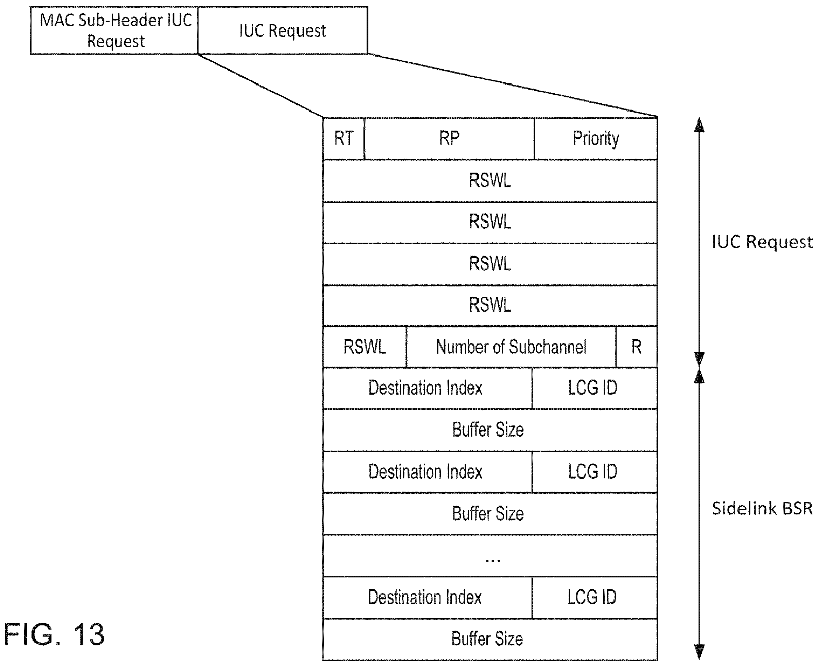

In certain example embodiments, the UE-A may process the received IUC information from the different tethering group members. Based on UE-A's own sensing observations, UE-A may compose the IUCInformationTethering. In other example embodiments, UE-A may be informed if, for example, UE-B needs to communicate with UE-C, or other UEs other than UE-A, via direct communication with these UEs. For example, this information may be provided as part of the IUC information shared by UE-B (and/or UE-C) to UE-A. For instance, by attaching a SL buffer status report (BSR) (or similar) that indicates what is the intended destination of UE-B (and/or UE-C) transmission. The contents of the sidelink BSR integrated with the IUC request MAC CE may be illustrated in FIG. 13. In particular, FIG. 13 illustrates an example SL IUC with BSR information, according to certain example embodiments.

In certain example embodiments, UE-A may be informed if UE-B needs to communicate with UE-C, or other UEs other than UE-A, as part of configuration during initial access. In other example embodiments, upon being informed of what is the targeted receiver of the UE-X transmission, UE-A may optimize the preferred and non-preferred resource sets. For example, if the intended receiver of UE-B transmission is UE-C, then UE-A upon receiving IUC information from UE-C, certain example embodiments may take into account the received IUC information from UE-C when determining the preferred and non-preferred sets for UE-B transmission that will be part of the IUCInformationTethering MAC CE.

Certain example embodiments described herein provide several technical improvements, enhancements, and /or advantages. For instance, in some example embodiments, it may be possible to provide a mechanism to reduce the number of SL slots used for signaling exchange data transmission latency. Additionally, by reducing the amount of individual transmission in time, may be possible to minimize the occurrence of the half-duplex problem (i.e., it minimizes the time that the UE is not able to receive any transmission due to performing its own transmission). Furthermore, according to other example embodiments, it may be possible to minimize the half-duplex occurrence (i.e., whenever a UE needs to transmit data and it cannot receive it at the same time instance), by reducing the amount of individual transmissions in time. Additionally, in other example embodiments, the higher payload introduced by IUCInformationTethering may imply that UE-A may need to extend its resource usage in the frequency domain (i.e., by the use of additional sub-channels) to retain the benefit of fewer transmissions in time. In other example embodiments, the number of SL slots used for IUC request messages may be reduced to one compared to current Rel. 17 SL mode 2 IUC.

As an additional example of the advantages provided by certain example embodiments, a tethering group may be composed of n UEs. The UE in charge of the resource coordination may groupcast one IUC request for the entire tethering group of (n-1) UEs, the first "1" in equation (1). The (n-1) tethering group UEs may transmit the IUC information to the coordinating UE in response to the IUC request. The coordinating UE may then groupcast the IUC information tethering, second "1" in equation (1). Thus, the number of required signaling messages, and consequently SL slots, $\gamma$ may be determined by:

$$\gamma = 1 + (n - 1) + 1, \qquad (1)$$

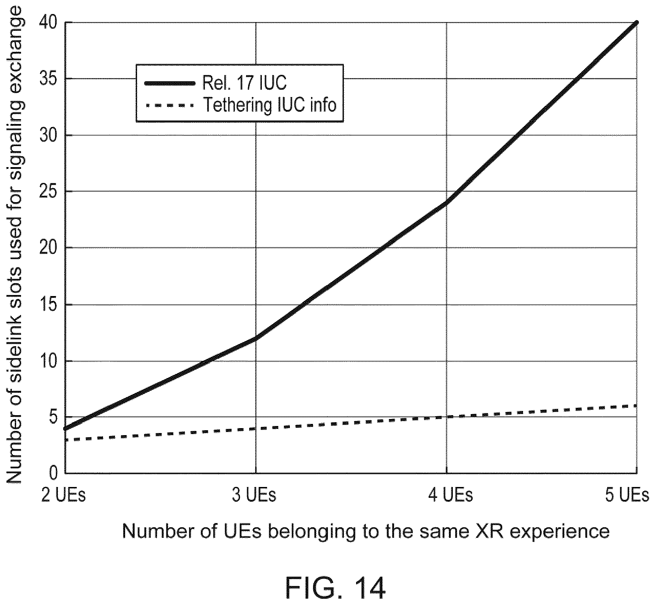

where n corresponds to the number of devices belonging to the XR experience. FIG. 14 illustrates an example of the number of SL slots needed for IUC signaling exchange for different numbers of UEs belonging to the same XR experience, according to certain example embodiments. As illustrated in FIG. 14, the number of UEs in the XR experience ranges from 2 to 5.

The benefit of a larger MAC PDU IUC over smaller MAC PDUs is that it can use an SL slot expanded across multiple sub-channels compared to multiple individual transmissions, each taking as a minimum an SL slot and a sub-channel (i.e., 14 OFDM symbols and 10 PRBs in the time and frequency domain, respectively). Regarding SL resource usage, the overhead reduction is noticeable since it only one PSCCH (2-3 OFDM symbols and a minimum of 10 PRBs).

The comparison between larger and smaller MAC PDUs can be expressed in terms of OFDM symbols as follows:

$$N = \frac{\text{number of concatenated IUC information MAC PDUs}}{\text{number of IUC information } transmissions}.$$

The overhead (OH)due to the PSCCH carrying the two-stage SCI would be:

$$OH_{PSCCH} = 3\,OFDM\,symbols \times 10\,PRBs \times 12\,subcarriers$$

$$OH_{PSCCH_{2ndSCI}} = M_0\,OFDM\,symbols.$$

The MAC header overhead would be:

$$OH_{MAC_{HEADER}} = M_1\,OFDM\,symbols.$$

Finally, the overhead of the MAC PDU would be:

$$IUC_{Information\_MAC\_PDU} = M_2 \; OFDM \; symbols.$$

In the example shown above, the M0, M1, and M2 actual values may depend on the resource pool configuration and MCS selected. However, in the comparison, it may be assumed that these values remain the same for certain example embodiments and the Release 17 baseline. Then, the required OFDM symbols needed by certain example embodiments (Equation (2)) versus the current Release 17 (Equation (3)) may be as follows:

$$OH_{PSCCH} + OH_{PSCCH_{2ndSCI}} + N \times \left( OH_{MAC_{HEADER}} + IUC_{Information\_MAC\_PDU} \right) \quad (2)$$

$$N \times \left( OH_{PSCCH} + OH_{PSCCH_{2ndSCI}} + OH_{MAC_{HEADER}} + IUC_{Information\_MAC\_PDU} \right) \quad (3).$$

With equation (2), it may be possible to reduce the overhead by $N \times (OH_{PSCCH} + OH_{PSCCH2ndSCI})$. Thus, according to certain example embodiments, it may be possible to reduce overhead, and the number of individual transmissions, which in turn minimizes the occurrence of half-duplex problems.

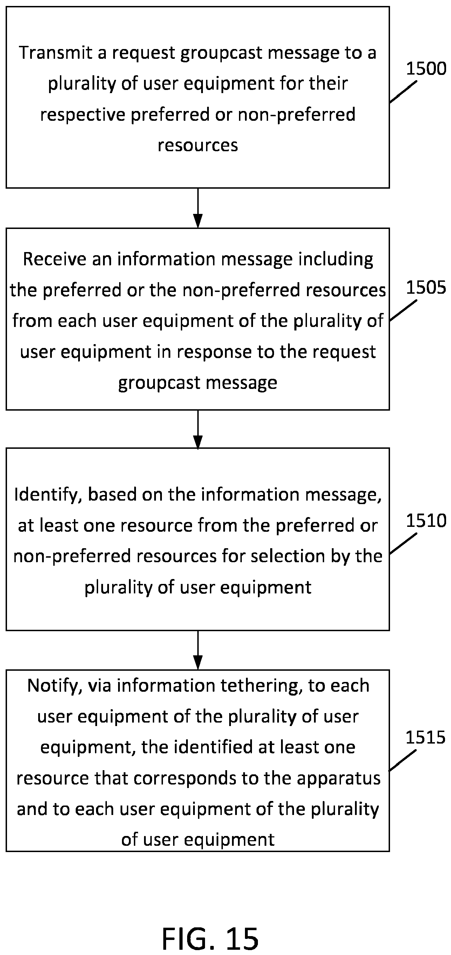

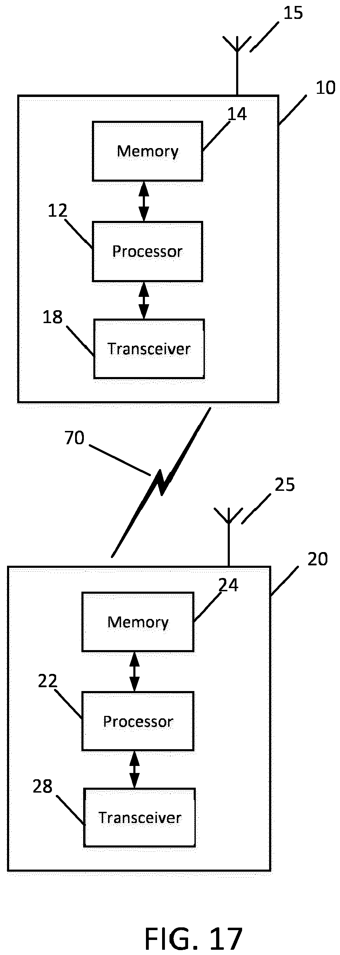

FIG. 15 illustrates an example flow diagram of a method, according to certain example embodiments. In an example embodiment, the method of FIG. 15 may be performed by a network entity, or a group of multiple network elements in a 3GPP system, such as LTE or 5G-NR. For instance, in an example embodiment, the method of FIG. 15 may be performed by a UE (e.g., UE-A) similar to one of apparatuses 10 or 20 illustrated in FIG. 17.

According to certain example embodiments, the method of FIG. 15 may include, at 1500, transmitting a request groupcast message to a plurality of UE for their respective preferred or non-preferred resources. The method may also include, at 1505, receiving an information message including the preferred or the non-preferred resources from each UE of the plurality of UE in response to the request groupcast message. The method may further include, at 1510, identifying, based on the information message, at least one resource from the preferred or non-preferred resources for selection by the plurality of UE. In addition, the method may include, at 1515, notifying, via information tethering, to each UE of the plurality of UE, the identified at least one resource that corresponds to a coordinating device and to each user equipment of the plurality of UE.

According to certain example embodiments, the method may also include concatenating the information message received from each UE of the plurality of UE into a concatenated message. In some example embodiments, the concatenation may correspond to the collection of all IUC information received by UE-A and shared to UE-B and UE-C. The combination may refer to UE-A (e.g., coordinating device) processing the IUC information from all other UEs and then, transmitting it as a combined IUC information. For example, the combined IUC message may correspond to a single preferred/non-preferred set that considers the intersection of the preferred/non-preferred sets from the devices in the tethering group. According to some example embodiments, the method may further include transmitting the concatenated information message to each UE of the plurality of UE. According to other example embodiments, the coordinating device and the plurality of UE are part of a tethering group, and the information tethering may include a MAC CE included in a MAC CE PDU IUC.

In certain example embodiments, the request groupcast message may include a MAC CE field. In some example embodiments, when traffic from the coordinating device and the plurality of UE is the same, the MAC CE field may be reused. In other example embodiments, when the traffic from the coordinating device and the plurality of UE is different, the method may further include concatenating a plurality of inter-user equipment request MAC CEs in a same MAC SDU

According to certain example embodiments, the MAC SDU may include a preamble MAC CE indicating identifiers corresponding to the coordinating device and the plurality of UE. According to other example embodiments, a correspondence relationship between the identifiers and a MAC PDU may be based on an order of appearance of the MAC CEs in the MAC SDU. According to further example embodiments, the plurality of inter-user equipment request MAC CEs may include inter-user equipment requests or inter-user equipment-information.

In certain example embodiments, each inter-user equipment-request MAC CE, or each inter-user equipment-information MAC CE may include the request groupcast message. In some example embodiments, the method may also include sensing observations of a resource pool, and the identification of the at least one resource may further be based on the sensing observations. In other example embodiments, the method may also include receiving information from a first UE of the plurality of UE of a need to communicate with a second UE of the plurality of UE via direct communication or as part of a configuration during an initial access. In further example embodiments, the information tethering message may utilize IUC information tethering.

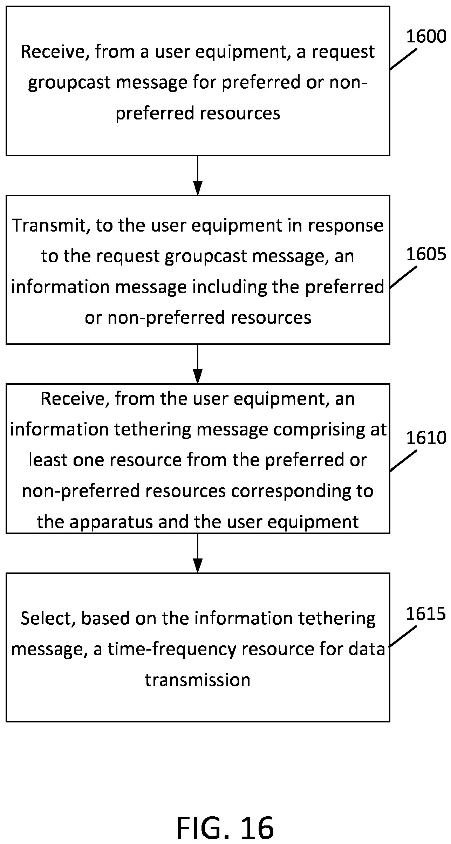

FIG. 16 illustrates an example of a flow diagram of another method, according to certain example embodiments. In an example embodiment, the method of FIG. 16 may be performed by a network entity, or a group of multiple network elements in a 3GPP system, such as LTE or 5G-NR. For instance, in an example embodiment, the method of FIG. 16 may be performed by another UE (e.g., UE-B and/or UE-C) similar to one of apparatuses 10 or 20 illustrated in FIG. 17.

According to certain example embodiments, the method of FIG. 16 may include, at 1600, receiving, from a coordinating device, a request groupcast message for preferred or non-preferred resources. The method may also include, at 1605, transmitting, to the coordinating device in response to the request groupcast message, an information message including the preferred or non-preferred resources. The method may further include, at 1610, receiving, from the coordinating device, an information tethering message including at least one resource from the preferred or non-preferred resources corresponding to a UE and the coordinating device. In addition, the method may include, at 1615, selecting, based on the information tethering message, a time-frequency resource for data transmission.

According to certain example embodiments, the method may also include receiving, from the coordinating device, a concatenated message including a combination of information messages from a plurality of UE and the UE. According to other example embodiments, the coordinating device and the UE may be part of a tethering group of a plurality of coordinating device. According to further example embodiments, the information tethering message may include a MAC CE included in a MAC PDU IUC.

In certain example embodiments, the request groupcast message may include a MAC CE field. In some example embodiments, when traffic from the coordinating device and the UE the same, the MAC CE field may be reused. In other example embodiments, when the traffic from the UE and the coordinating device is different, the request groupcast message and the information tethering message may each be received as a concatenated message in a MAC SDU. In further example embodiments, the concatenated message may include a combination of the information message of the UE, and information messages from a plurality of UE.

According to certain example embodiments, the MAC SDU may include a preamble MAC CE indicating identifiers corresponding to the user equipment and the coordinating device. According to some example embodiments, a correspondence relationship between the identifiers and a MAC PDU may be based on an order of appearance of the MAC CEs in the MAC SDU. According to other example embodiments, the method may also include transmitting, to the coordinating device, information of a need to communicate with a second UE via direct communication or as part of a configuration during an initial access. According to further example embodiments, the information tethering message may utilize IUC information tethering.

In certain example embodiments, apparatus 10 may include at least one processor 12, and at least one memory 14 including computer program code. The at least one memory 14 and the computer program code may be configured to, with storing instructions that, when executed by the at least one processor 12, cause the apparatus 10 to transmit (e.g., steps 820a and 820b in FIG. 8) a request groupcast message to a plurality of UE for their respective preferred or non-preferred resources. The apparatus 10 may also be caused to receive (e.g., steps 825 and 830 in FIG. 8) an information message including the preferred or the non-preferred resources from each UE of the plurality of UE in response to the request groupcast message. Apparatus 10 may further be caused to identify (e.g., steps 835 and 840 in FIG. 8), based on the information message, at least one resource from the preferred or non-preferred resources for selection by the plurality of UE. In addition, apparatus 10 may be caused to notify (e.g., steps 835 and 840 in FIG. 8), via information tethering, to each UE of the plurality of UE, the identified at least one resource that corresponds to the apparatus and to each UE of the plurality of UE.

In certain example embodiments, the apparatus may also be caused to concatenate the information message received from each UE of the plurality of UE into a concatenated message, and transmit the concatenated information message to each UE of the plurality of UE. In some example embodiments, the apparatus and the plurality of UE may be part of a tethering group (e.g., FIG. 8), and the information tethering may include a MAC CE included in a MAC PDU ICU. In other example embodiments, the request groupcast message may include a MAC CE field.

According to certain example embodiments, when traffic from the apparatus and the plurality of UE is the same, the MAC CE field may be reused. According to some example embodiments, when the traffic from the apparatus and the plurality of UE is different, the apparatus may further be caused to concatenate a plurality of inter-user equipment request MAC CEs in a same MAC SDU. According to other example embodiments, the MAC SDU may include a preamble MAC CE indicating identifiers corresponding to the apparatus and the plurality of UE. According to further example embodiments, a correspondence relationship between the identifiers and a MAC PDU may be based on an order of appearance of the MAC CEs in the MAC SDU.

In certain example embodiments, the plurality of inter-user equipment request MAC CEs may include inter-user equipment requests or inter-user equipment-information. In some example embodiments, each inter-user equipment-request MAC CE, or each inter-user equipment-information MAC CE may include the request groupcast message (e.g., FIGs. 10 and 12). In other example embodiments, the apparatus may also be caused to sense observations of a resource pool. In further example embodiments, the identification of the at least one resource may be further based on the sensing observations. In other example embodiments, the apparatus may also be caused to receive information from a first UE (e.g., UE-A) of the plurality of user equipment (e.g., UE-B, UE-C, etc.) of a need to communicate with a second user equipment of the plurality of user equipment via direct communication or as part of a configuration during an initial access. In some example embodiments, the information tethering message may utilize IUC information tethering.

According to certain example embodiments, apparatus 10 may include means for transmitting a request groupcast message to a plurality of UE for their respective preferred or non-preferred resources (e.g., steps 820a and 820b in FIG. 8). Apparatus 10 may also include means for receiving an information message including the preferred or the non-preferred resources from each UE of the plurality of UE in response to the request groupcast message (e.g., steps 825 and 830 in FIG. 8). Apparatus 10 may further include means for identifying, based on the information message, at least one resource from the preferred or non-preferred resources for selection by the plurality of UE (e.g., steps 835 and 840 in FIG. 8). In addition, apparatus 10 may include means for notifying, via information tethering, to each UE of the plurality UE, the identified at least one resource that corresponds to the apparatus and to each UE of the plurality of UE (e.g., steps 835 and 840 in FIG. 8).

According to certain example embodiments, apparatus 10 may also include means for concatenating the information message received from each UE of the plurality of UE into a concatenated message. According to some example embodiments, the apparatus may further include means for transmitting the concatenated information message to each UE of the plurality of UE. According to other example embodiments, the apparatus and the plurality of UE may be part of a tethering group, and the information tethering may include a medium access control element included in a MAC PDU ICU. According to further example embodiments, the request groupcast message may include a MACCE field.

In certain example embodiments, when traffic from the apparatus and the plurality of UE is the same, the MAC CE field may be reused. In some example embodiments, when the traffic from the apparatus and the plurality of UE is different, apparatus 10 may further include means for concatenating a plurality of inter-user equipment request MAC CEs in a same MAC SDU. In other example embodiments, the MAC SDU may include a preamble MAC CE indicating identifiers corresponding to the apparatus and the plurality of UE. In further example embodiments, a correspondence relationship between the identifiers and a MAC PDU may be based on an order of appearance of the MAC CEs in the MAC SDU.

According to certain example embodiments, the plurality of inter-user equipment request MAC CEs may include inter-user equipment requests or inter-user equipment-information. According to some example embodiments, each inter-user equipment-request MAC CE, or each inter-user equipment-information MAC CE may include the request groupcast message. According to other example embodiments, apparatus 10 may also include means for sensing observations of a resource pool. According to further example embodiments, the identification of the at least one resource may further be based on the sensing observations.

According to certain example embodiments, apparatus 10 may further include means for receiving information from a first UE of the plurality of UE of a need to communicate with a second UE of the plurality of UE via direct communication or as part of a configuration during an initial access. In other example embodiments, the information tethering message may utilize IUC information tethering.

In other example embodiments, apparatus 10 may include at least one processor 12, and at least one memory 14 including computer program code. The at least one memory 14 and the computer program code may be configured to, with storing instructions that, when executed by the at least one processor 12, cause the apparatus 10 to receive (e.g., steps 820a and 820b in FIG. 8), from a UE, a request groupcast message for preferred or non-preferred resources. Apparatus 10 may also be caused to transmit (e.g., steps 825 and 830 in FIG. 8), to the UE in response to the request groupcast message, an information message including the preferred or non-preferred resources. Apparatus 10 may further be caused to receive (835, 840), from the UE, an information tethering message including at least one resource from the preferred or non-preferred resources corresponding to the apparatus and the UE. In addition, apparatus 10 may be caused to select, based on the information tethering message, a time-frequency resource for data transmission.

According to certain example embodiments, the apparatus may also be caused to receive, from the UE, a concatenated message including a combination of information messages from a plurality of UE and the apparatus. According to some example embodiments, the UE and the apparatus may be part of a tethering group of a plurality of UE (e.g., FIG. 8). According to other example embodiments, the information tethering message may include a MAC CE included in a MAC CE PDU IUC. According to other example embodiments, the request groupcast message may include a MAC CE field.

In certain example embodiments, when traffic from the UE and the apparatus is the same, the MAC CE field may be reused. In some example embodiments, when the traffic from the apparatus and the UE is different, the request groupcast message and the information tethering message may each be received as a concatenated message in a MAC CE SDU. In

According to certain example embodiments, the concatenated message may include a combination of the information message of the apparatus, and information messages from a plurality of UE. According to some example embodiments, the MAC CE SDU may include a preamble MAC CE indicating identifiers corresponding to the apparatus and the UE. According to other example embodiments, a correspondence relationship between the identifiers and a MAC PDU may be based on an order of appearance of the MAC CEs in the MAC CE SDU. According to further example embodiments, the apparatus may also be caused to transmit, to the UE, information of a need to communicate with a second UE via direct communication or as part of a configuration during an initial access. According to other example embodiments, the information tethering message may utilize IUC information tethering.

According to certain example embodiments, apparatus 10 may include means for receiving, from a UE, a request groupcast message for preferred or non-preferred resources (e.g., steps 820a and 820b in FIG. 8). Apparatus 10 may also include means for transmitting, to the user equipment in response to the request groupcast message, an information message including the preferred or non-preferred resources (e.g., steps 825 and 830 in FIG. 8). Apparatus 10 may further include means for receiving, from the user equipment, an information tethering message including at least one resource from the preferred or non-preferred resources corresponding to the apparatus and the user equipment (e.g., steps 835 and 840 in FIG. 8). In addition, apparatus 10 may include means for selecting, based on the information tethering message, a time-frequency resource for data transmission.

According to certain example embodiments, apparatus 10 may also include means for receiving, from the user equipment, a concatenated message including a combination of information messages from a plurality of user equipment and the apparatus. According to some example embodiments, the UE and the apparatus may be part of a tethering group of a plurality of UE (e.g., FIG. 8). According to other example embodiments, the information tethering message may include a MAC CE included in a MAC PDU IUC. According to further example embodiments, the request groupcast message may include a MAC CE field.

In certain example embodiments, when traffic from the UE and the apparatus is the same, the MAC CE field may be reused. In some example embodiments, when the traffic from the apparatus and the UE is different, the request groupcast message and the information tethering message may each be received as a concatenated message in a MAC SDU. In other example embodiments, the concatenated message may include a combination of the information message of the apparatus, and information messages from a plurality of UE. In further example embodiments, the MAC SDU may include a preamble MAC CE indicating identifiers corresponding to the apparatus and the UE. In some example embodiments, a correspondence relationship between the identifiers and a MAC PDU may be based on an order of appearance of the MAC CEs in the MAC SDU.

According to certain example embodiments, apparatus 10 may also include means for transmitting, to the UE, information of a need to communicate with a second UE via direct communication or as part of a configuration during an initial access. According to some example embodiments, the information tethering message may utilize IUC information tethering.

FIG. 17 illustrates a set of apparatuses 10 and 20 according to certain example embodiments. In certain example embodiments, the apparatus 10 may be an element in a communications network or associated with such a network, such as a UE (e.g., relay UE and/or transmit UE), mobile equipment (ME), mobile station, mobile device, stationary device, IoT device, smartphone, handheld device, vehicle mounted device, wearable device, or other device. It should be noted that one of ordinary skill in the art would understand that apparatus 10 may include components or features not shown in FIG. 17.

In some example embodiments, apparatus 10 may include one or more processors, one or more computer-readable storage medium (for example, memory, storage, or the like), one or more radio access components (for example, a modem, a transceiver, or the like), and/or a user interface. In some example embodiments, apparatus 10 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 10 may include components or features not shown in FIG. 17.

As illustrated in the example of FIG. 17, apparatus 10 may include or be coupled to a processor 12 for processing information and executing instructions or operations. Processor 12 may be any type of general or specific purpose processor. In fact, processor 12 may include one or more of generalpurpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in FIG. 17, multiple processors may be utilized according to other example embodiments. For example, it should be understood that, in certain example embodiments, apparatus 10 may include two or more processors that may form a multiprocessor system (e.g., in this case processor 12 may represent a multiprocessor) that may support multiprocessing. According to certain example embodiments, the multiprocessor system may be tightly coupled or loosely coupled (e.g., to form a computer cluster).

Processor 12 may perform functions associated with the operation of apparatus 10 including, as some examples, precoding of antenna gain/phase parameters, encoding and decoding of individual bits forming a communication message, formatting of information, and overall control of the apparatus 10, including processes and examples illustrated in FIGs. 1-16.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In certain example embodiments, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10 to perform any of the methods and examples illustrated in FIGs. 1-16.

In some example embodiments, apparatus 10 may also include or be coupled to one or more antennas 15 for receiving a downlink signal and for transmitting via an UL from apparatus 10. Apparatus 10 may further include a transceiver 18 configured to transmit and receive information. The transceiver 18 may also include a radio interface (e.g., a modem) coupled to the antenna 15. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an UL.

For instance, transceiver 18 may be configured to modulate information on to a carrier waveform for transmission by the antenna(s) 15 and demodulate information received via the antenna(s) 15 for further processing by other elements of apparatus 10. In other example embodiments, transceiver 18 may be capable of transmitting and receiving signals or data directly. Additionally or alternatively, in some example embodiments, apparatus 10 may include an input and/or output device (I/O device). In certain example embodiments, apparatus 10 may further include a user interface, such as a graphical user interface or touchscreen.

In certain example embodiments, memory 14 stores software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software. According to certain example embodiments, apparatus 10 may optionally be configured to communicate with apparatus 20 via a wireless or wired communications link 70 according to any radio access technology, such as NR.

According to certain example embodiments, processor 12 and memory 14 may be included in or may form a part of processing circuitry or control circuitry. In addition, in some example embodiments, transceiver 18 may be included in or may form a part of transceiving circuitry.

For instance, in certain example embodiments, apparatus 10 may be controlled by memory 14 and processor 12 to transmit a request groupcast message to a plurality of user equipment for their respective preferred or non-preferred resources. Apparatus 10 may also be controlled by memory 14 and processor 12 to receive an information message including the preferred or the non-preferred resources from each UE of the plurality of UE in response to the request groupcast message. Apparatus 10 may further be controlled by memory 14 and processor 12 to identify, based on the information message, at least one resource from the preferred or non-preferred resources for selection by the plurality of UE. In addition, apparatus 10 may be controlled by memory 14 and processor 12 to notify, via information tethering, to each UE of the plurality of UE, the identified at least one resource that corresponds to the apparatus and to each UE of the plurality of UE.

In other example embodiments, apparatus 10 may be controlled by memory 14 and processor 12 to receive, from a UE, a request groupcast message for preferred or non-preferred resources. Apparatus 10 may also be controlled by memory 14 and processor 12 to transmit, to the UE in response to the request groupcast message, an information message including the preferred or non-preferred resources. Apparatus 10 may further be controlled by memory 14 and processor 12 to receive, from the user equipment, an information tethering message comprising at least one resource from the preferred or non-preferred resources corresponding to the apparatus and the UE. In addition, apparatus 10 may be controlled by memory 14 and processor 12 to select, based on the information tethering message, a time-frequency resource for data transmission.

As illustrated in the example of FIG. 17, apparatus 20 may be a network, core network element, or element in a communications network or associated with such a network, such as a gNB, LMF, BS, cell, or NW. It should be noted that one of ordinary skill in the art would understand that apparatus 20 may include components or features not shown in FIG. 17.

As illustrated in the example of FIG. 17, apparatus 20 may include a processor 22 for processing information and executing instructions or operations. Processor 22 may be any type of general or specific purpose processor. For example, processor 22 may include one or more of generalpurpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in FIG. 17, multiple processors may be utilized according to other example embodiments. For example, it should be understood that, in certain example embodiments, apparatus 20 may include two or more processors that may form a multiprocessor system (e.g., in this case processor 22 may represent a multiprocessor) that may support multiprocessing. In certain example embodiments, the multiprocessor system may be tightly coupled or loosely coupled (e.g., to form a computer cluster).

According to certain example embodiments, processor 22 may perform functions associated with the operation of apparatus 20, which may include, for example, precoding of antenna gain/phase parameters, encoding and decoding of individual bits forming a communication message, formatting of information, and overall control of the apparatus 20, including processes and examples illustrated in FIGs. 1-16.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In certain example embodiments, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20 to perform the methods and examples illustrated in FIGs. 1-16.

In certain example embodiments, apparatus 20 may also include or be coupled to one or more antennas 25 for transmitting and receiving signals and/or data to and from apparatus 20. Apparatus 20 may further include or be coupled to a transceiver 28 configured to transmit and receive information. The transceiver 28 may include, for example, a plurality of radio interfaces that may be coupled to the antenna(s) 25. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an UL).

As such, transceiver 28 may be configured to modulate information on to a carrier waveform for transmission by the antenna(s) 25 and demodulate information received via the antenna(s) 25 for further processing by other elements of apparatus 20. In other example embodiments, transceiver 18 may be capable of transmitting and receiving signals or data directly. Additionally or alternatively, in some example embodiments, apparatus 20 may include an input and/or output device (I/O device).

In certain example embodiment, memory 24 may store software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

According to some example embodiments, processor 22 and memory 24 may be included in or may form a part of processing circuitry or control circuitry. In addition, in some example embodiments, transceiver 28 may be included in or may form a part of transceiving circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10 and 20) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

In some example embodiments, an apparatus (e.g., apparatus 10 and/or apparatus 20) may include means for performing a method, a process, or any of the variants discussed herein. Examples of the means may include one or more processors, memory, controllers, transmitters, receivers, and/or computer program code for causing the performance of the operations.

Certain example embodiments may be directed to an apparatus that includes means for performing any of the methods described herein including, for example, means for transmitting a request groupcast message to a plurality of UE for their respective preferred or non-preferred resources. The apparatus may also include means for receiving an information message including the preferred or the non-preferred resources from each user equipment of the plurality of user equipment in response to the request groupcast message. The apparatus may further include means for identifying, identifying, based on the information message, at least one resource from the preferred or non-preferred resources for selection by the plurality of user equipment. In addition, the apparatus may include means for notifying, via information tethering, to each UE of the plurality of UE, the identified at least one resource that corresponds to the apparatus and to each user equipment of the plurality of UE.

Certain example embodiments may also be directed to an apparatus that includes means for receiving, from a UE, a request groupcast message for preferred or non-preferred resources. The apparatus may also include means for transmitting, to the UE in response to the request groupcast message, an information message including the preferred or non-preferred resources. The apparatus may further include means for receiving, from the UE, an information tethering message including at least one resource from the preferred or non-preferred resources corresponding to the apparatus and the UE. In addition, the apparatus may include means for selecting, based on the information tethering message, a time-frequency resource for data transmission.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology.

Partial Glossary:

| | |
|---|---|
| 3GPP | 3rd Generation Partnership Project |
| 5G | 5th Generation |
| 5GCN | 5G Core Network |
| 5GS | 5G System |
| AR | Augmented Reality |
| BS | Base Station |
| E2E | End-to-End |
| eNB | Enhanced Node B |

| | |
|---|---|
| gNB | 5G or Next Generation NodeB |
| IUC | Inter-UE Coordination |
| LTE | Long Term Evolution |
| MAC CE | Medium Access Control Control Element |
| NR | New Radio |
| NW | Network |
| OFDM | Orthogonal Frequency Division Multiplexing |
| PBD | Packet Delay Budget |
| PSCCH | Physical Sidelink Control Channel |
| PSDB | PDU Set Delay Budget |
| PSSCH | Physical Sidelink Shared Channel |
| RRC | Radio Resource Control |
| SCI | Sidelink Control Information |
| SL | Sidelink |
| SPS | Semi-Persistent Scheduling |
| UE | User Equipment |
| UL | Uplink |
| VR | Virtual Reality |
| XR | Extended Reality |

**Claims**

1. An apparatus, comprising:

   at least one processor; and
   at least one memory comprising computer program code,
   the at least one memory and the computer program code configured to, with storing instructions that, when executed by the at least one processor, cause the apparatus at least to:

   transmit a request groupcast message to a plurality of user equipment for their respective preferred or non-preferred resources;
   receive an information message comprising the preferred or the non-preferred resources from each user equipment of the plurality of user equipment in response to the request groupcast message;
   identify, based on the information message, at least one resource from the preferred or non-preferred resources for selection by the plurality of user equipment; and
   notify, via information tethering, to each user equipment of the plurality of user equipment, the identified at least one resource that corresponds to the apparatus and to each user equipment of the plurality of user equipment.

2. The apparatus according to claim 1, wherein the apparatus is further caused to:

   concatenate the information message received from each user equipment of the plurality of user equipment into a concatenated message; and
   transmit the concatenated information message to each user equipment of the plurality of user equipment.

3. The apparatus according to claims 1 or 2,

   wherein the apparatus and the plurality of user equipment are part of a tethering group, and
   wherein the information tethering comprises a medium access control element included in a medium access control element protocol data unit inter-user equipment-coordination.

4. The apparatus according to any of claims 1-3, wherein the request groupcast message comprises a medium access control element field.

5. The apparatus according to claim 4, wherein when traffic from the apparatus and the plurality of user equipment is the same, the medium access control element field is reused.

6. The apparatus according to claim 3, wherein when the traffic from the apparatus and the plurality of user equipment is different, the apparatus is further caused to:
concatenate plurality of inter-user equipment request medium access control elements in a medium access control service data unit.

7. The apparatus according to claim 6,

   wherein the medium access control service data unit comprises a preamble medium access control element indicating identifiers corresponding to the apparatus and the plurality of user equipment, and
   wherein a correspondence relationship between the identifiers and a medium access control protocol data unit is based on an order of appearance of the medium access control elements in the medium access control service data unit.

8. The apparatus according to claim 6, wherein the plurality of inter-user equipment request medium access control elements comprise inter-user equipment requests or inter-user equipment-information.

9. The apparatus according to claim 8, wherein each inter-user equipment-request medium access control element, or each inter-user equipment-information medium access control element comprises the request groupcast message.

10. The apparatus according to any of claims 1-9, wherein the apparatus is further caused to:

    sense observations of a resource pool, and
    wherein the identification of the at least one resource is further based on the sensing observations.

11. The apparatus according to any of claims 1-10, wherein the apparatus is further caused to:
receive information from a first user equipment of the plurality of user equipment of a need to communicate with a second user equipment of the plurality of user equipment via direct communication or as part of a configuration during an initial access.

12. The apparatus according to any of claims 1-11, wherein the information tethering message utilizes inter-user equipment coordination information tethering.

13. An apparatus, comprising:

    at least one processor; and
    at least one memory comprising computer program code,
    the at least one memory and the computer program code configured to, with storing instructions that, when executed by the at least one processor, cause the apparatus at least to:

       receive, from a user equipment, a request groupcast message for preferred or non-preferred resources;
       transmit, to the user equipment in response to the request groupcast message, an information message comprising the preferred or non-preferred resources;
       receive, from the user equipment, an information tethering message comprising at least one resource from the preferred or non-preferred resources corresponding to the apparatus and the user equipment; and
       select, based on the information tethering message, a time-frequency resource for data transmission.

14. The apparatus according to claim 13, wherein the apparatus is further caused to:
receive, from the user equipment, a concatenated message comprising a combination of information messages from a plurality of user equipment and the apparatus.

15. The apparatus according to claims 13 or 14,

    wherein the user equipment and the apparatus are part of a tethering group of a plurality of user equipment, and
    wherein the information tethering message comprises a medium access control element included in a medium access control element protocol data unit inter-user equipment-coordination.

FIG. 1

1. SL-SR

2. Resource allocation

3. SL Transmission (PSCCH/PSSCH)

4. SL Feedback (PSFCH)

SL Tx

SL Rx

FIG. 2(a)

Sensing Window

Selection Window

Resources deemed as available for selection in the next period

Resources deemed as available for selection

PSSCH

PSSCH

PSSCH

PSCCH

PSCCH

PSCCH

FIG. 2(b)

| AGC | PSSCH | PSSCH | DM RS | PSSCH | PSSCH | PSSCH | PSSCH | PSSCH | PSSCH | DMRS | PSCCH | PSCCH | GUARD |
|-----|-------|-------|-------|-------|-------|-------|-------|-------|-------|------|-------|-------|-------|
| | PSCCH | | | | | | | | | | | | |

## FIG. 3(a)

| AGC | PSSCH | PSSCH | DM RS | PSSCH | PSSCH | PSSCH | PSSCH | DM RS | PSSCH | GUARD | AGC (PSFCH) | PSFCH | GUARD |
|-----|-------|-------|-------|-------|-------|-------|-------|-------|-------|-------|-------------|-------|-------|
| 0 | PSCCH | | 3 | 4 | 5 | 6 | 7 | 8 | 9 | 10 | 11 | 12 | 13 |

## FIG. 3(b)

| $l_d$ in symbols | DM-RS position $l$ | | | | | |
|---|---|---|---|---|---|---|
| | PSCCH duration 2 symbols | | | PSCCH duration 3 symbols | | |
| | Number of PSSCH DM-RS | | | Number of PSSCH DM-RS | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

FIG. 4

EP 4 462 903 A1

500       505

UE-B       UE-A

IUC request    510

IUC information    515

PSCCH/PSSCH based on
IUC information    520

## FIG. 5(a)

525       530

UE-B       UE-A

PSCCH/PSSCH    535

IUC information    540

Tx based on IUC
information    545

## FIG. 5(b)

FIG. 6

FIG. 7

FIG. 8

| MAC Sub-Header Tethering group ID | MAC Sub-Header IUC Request 1 | | MAC Sub-Header IUC Request N | Tethering group ID MAC CE | IUC Request 1 | | IUC Request N |

| TETHERING ID 1 |
|---|
| ... |
| ... |
| TETHERING ID N |

| RT | RP | | Priority |
|---|---|---|---|
| RSWL | | | |
| RSWL | | | |
| RSWL | | | |
| RSWL | | | |
| RSWL | Number of Subchannel | | R |

EP 4 462 903 A1

FIG. 9

| RT | RP | Priority |
|---|---|---|
| RSWL | | |
| RSWL | | |
| RSWL | | |
| RSWL | | |
| RSWL | Number of Subchannel | R |
| TETHERING ID 1 | | |
| RT | RP | Priority |
| RSWL | | |
| RSWL | | |
| RSWL | | |
| RSWL | | |
| RSWL | Number of Subchannel | R |
| TETHERING ID 2 | | |

| RT | RP | Priority |
|---|---|---|
| RSWL | | |
| RSWL | | |
| RSWL | | |
| RSWL | | |
| RSWL | Number of Subchannel | R |
| TETHERING ID N | | |

| MAC Sub-Header IUC Request | IUC Request |
|---|---|

FIG. 10

28

FIG. 11

| MAC Sub-Header IUC Information | IUC Information |
|---|---|

| RT | RSL | | | | | | |
|---|---|---|---|---|---|---|---|
| RSL | | | | | | | |
| RSL | | $LSI_0$ | | | | | $RC_0$ |
| $RC_0$ | | | | | | | |
| $RC_0$ | | | | | | | |
| $RC_0$ | | | | | | | |
| $RC_0$ | R | R | R | R | R | R | R |

...

| First resource location$_{i-1}$ | | | | |
|---|---|---|---|---|
| First resource location$_{i-1}$ | | | $LSI_i$ | |
| $LSI_i$ | | $RC_i$ | | |
| $RC_i$ | | | | |
| $RC_i$ | | | | |
| $RC_i$ | | R | R | R | R |
| TETHERING ID 1 | | | | |

| RT | RSL | | | | | | |
|---|---|---|---|---|---|---|---|
| RSL | | | | | | | |
| RSL | | $LSI_0$ | | | | | $RC_0$ |
| $RC_0$ | | | | | | | |
| $RC_0$ | | | | | | | |
| $RC_0$ | | | | | | | |
| $RC_0$ | R | R | R | R | R | R | R |

...

| First resource location$_{i-1}$ | | | | |
|---|---|---|---|---|
| First resource location$_{i-1}$ | | | $LSI_i$ | |
| $LSI_i$ | | $RC_i$ | | |
| $RC_i$ | | | | |
| $RC_i$ | | | | |
| $RC_i$ | | R | R | R | R |
| TETHERING ID N | | | | |

FIG. 12

EP 4 462 903 A1

| MAC Sub-Header IUC Request | IUC Request |
|---|---|

| RT | RP | Priority |
|---|---|---|
| RSWL | | |
| RSWL | | |
| RSWL | | |
| RSWL | | |

| RSWL | Number of Subchannel | R |
|---|---|---|

| Destination Index | LCG ID |
|---|---|
| Buffer Size | |
| Destination Index | LCG ID |
| Buffer Size | |
| … | |
| Destination Index | LCG ID |
| Buffer Size | |

IUC Request

Sidelink BSR

FIG. 13

FIG. 14

Transmit a request groupcast message to a plurality of user equipment for their respective preferred or non-preferred resources

1500

Receive an information message including the preferred or the non-preferred resources from each user equipment of the plurality of user equipment in response to the request groupcast message

1505

Identify, based on the information message, at least one resource from the preferred or non-preferred resources for selection by the plurality of user equipment

1510

Notify, via information tethering, to each user equipment of the plurality of user equipment, the identified at least one resource that corresponds to the apparatus and to each user equipment of the plurality of user equipment

1515

## FIG. 15

Receive, from a user equipment, a request groupcast message for preferred or non-preferred resources

1600

Transmit, to the user equipment in response to the request groupcast message, an information message including the preferred or non-preferred resources

1605

Receive, from the user equipment, an information tethering message comprising at least one resource from the preferred or non-preferred resources corresponding to the apparatus and the user equipment

1610

Select, based on the information tethering message, a time-frequency resource for data transmission

1615

FIG. 16

FIG. 17

Europäisches
Patentamt

European
Patent Office

Office européen
des brevets

**EUROPEAN SEARCH REPORT**

Application Number

EP 24 15 6463

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/234546 A1 (LENOVO SINGAPORE PTE LTD [SG]) 25 November 2021 (2021-11-25) <br> * paragraphs [0005], [0035], [0059] * <br> * claims 1,14,16 * <br> * abstract; figures 1,2 * <br> ----- | 1-15 | INV. <br> H04W72/02 <br> H04W72/25 <br><br> ADD. <br> H04W72/563 |
| A | US 2022/159752 A1 (FARAG EMAD N [US] ET AL) 19 May 2022 (2022-05-19) <br> * paragraphs [0081], [0082] * <br> * paragraphs [0114] - [0124], [0130] * <br> * paragraphs [0131], [0145], [0146] * <br> ----- | 1-15 | |

TECHNICAL FIELDS
SEARCHED     (IPC)

H04W

The present search report has been drawn up for all claims

| Place of search | Date of completion of the search | Examiner |
|---|---|---|
| The Hague | 5 August 2024 | Coppieters, Stefaan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 6463

05-08-2024

| Patent document cited in search report | | Publication date | Patent family member(s) | | Publication date |
|---|---|---|---|---|---|
| WO 2021234546 | A1 | 25-11-2021 | BR 112022023353 | A2 | 24-01-2023 |
| | | | BR 112022023401 | A2 | 31-01-2023 |
| | | | CN 115699970 | A | 03-02-2023 |
| | | | CN 115804184 | A | 14-03-2023 |
| | | | EP 4154630 | A1 | 29-03-2023 |
| | | | EP 4154638 | A1 | 29-03-2023 |
| | | | US 2023189292 | A1 | 15-06-2023 |
| | | | US 2023291514 | A1 | 14-09-2023 |
| | | | WO 2021234545 | A1 | 25-11-2021 |
| | | | WO 2021234546 | A1 | 25-11-2021 |
| US 2022159752 | A1 | 19-05-2022 | CN 116530172 | A | 01-08-2023 |
| | | | EP 4205483 | A1 | 05-07-2023 |
| | | | KR 20230104896 | A | 11-07-2023 |
| | | | US 2022159752 | A1 | 19-05-2022 |
| | | | WO 2022108347 | A1 | 27-05-2022 |

EPO FORM P0459